# EUROPÄISCHE PATENTSCHRIFT

(11) **EP 3 319 851 B1**
(45) Veröffentlichungstag und Bekanntmachung des Hinweises auf die Patenterteilung: **10.11.2021**
(21) Anmeldenummer: 16733438.2
(22) Anmeldetag: 27.06.2016
(51) Int. Cl.: B60T 17/22, B60T 8/88

(54) **VERFAHREN UND VORRICHTUNG ZUM BETREIBEN EINES BREMSSYSTEMS FÜR EIN FAHRZEUG UND BREMSSYSTEM**
METHOD AND DEVICE FOR OPERATING A BRAKE SYSTEM FOR A VEHICLE AND BRAKE SYSTEM
PROCÉDÉ ET DISPOSITIF PERMETTANT DE FAIRE FONCTIONNER UN SYSTÈME DE FREINAGE D'UN VÉHICULE ET SYSTÈME DE FREINAGE

(30) Priorität: 29.06.2015 DE 102015110386
(43) Veröffentlichungstag der Anmeldung: 16.05.2018
(73) Patentinhaber: KNORR-BREMSE Systeme für Nutzfahrzeuge GmbH, 80809 München (DE)
(72) Erfinder: WÖRNER, Dieter, 75031 Eppingen (DE); HERGES, Michael, 80935 München (DE); RÖTHER, Friedbert, 74389 Cleebronn (DE); SCHWAB, Frank, 75249 Kieselbronn (DE)
(86) Internationale Anmeldenummer: PCT/EP2016/064792
(87) Internationale Veröffentlichungsnummer: WO 2017/001315

(56) Entgegenhaltungen:
- WO-A1-2013/093545
- US-A- 5 717 134
- US-A1- 2005 067 888
- US-A1- 2005 200 194

## Beschreibung

Die vorliegende Erfindung bezieht sich auf ein Verfahren und eine Vorrichtung zum Betreiben eines Bremssystems für ein Fahrzeug sowie auf ein Bremssystem.

Ansprechend auf eine Bremsanforderung eines Fahrers eines Fahrzeugs wird unter Verwendung eines Bremssystems ein Bremsdruck für eine Bremse des Fahrzeugs ausgesteuert. Das Bremssystem umfasst dazu ein elektronisch gesteuertes Stellglied. Als Backup für das elektronisch gesteuerte Stellglied ist ein pneumatischer Backup-Pfad vorgesehen.

Die US 2005/200194 A1 offenbart ein Verfahren zum Betreiben eines Bremssystems für ein Fahrzeug, wobei das Bremssystem eine elektronische Stelleinrichtung zum Aussteuern eines Bremsdrucks für eine Bremse des Fahrzeugs in einem Normalbetriebsmodus und eine weitere Stelleinrichtung zum Aussteuern des Bremsdrucks in einem Backupbetriebsmodus aufweist. Es wird von der elektronischen Stelleinrichtung zu der weiteren Stelleinrichtung umgeschaltet, wenn ein Fehler angezeigt wird, bei dem ein Umschalten von der mit dem Fehler behafteten elektronischen Stelleinrichtung zu der weitere Stelleinrichtung zu einer Verbesserung der Aussteuerung des Bremsdrucks führt.

Es ist die Aufgabe der vorliegenden Erfindung ein verbessertes Verfahren und eine verbesserte Vorrichtung zum Betreiben eines Bremssystems für ein Fahrzeug sowie ein verbessertes Bremssystem zu schaffen.

Diese Aufgabe wird durch ein Verfahren und eine Vorrichtung zum Betreiben eines Bremssystems für ein Fahrzeug sowie durch ein Bremssystem gemäß den Hauptansprüchen gelöst.

Dem vorliegenden Ansatz liegt die Erkenntnis zugrunde, dass es bei einem erkannten Fehler bei der Bereitstellung des Bremsdrucks im Stellglied, z.B. in Form eines Druckregelmoduls, nicht zwingend erforderlich ist, das Stellglied dauerhaft stromlos bzw. elektrisch passiv zu schalten und den Bremsdruck über den pneumatischen Backup-Pfad auszusteuern. Über den pneumatischen Backup-Pfad kann davon ausgegangen werden, dass das Systemverhalten im Backup ein Mindestmaß an Sicherheit gewährleistet. Die Umschaltung des Stellglieds in den stromlosen Zustand und damit die Bereitstellung des Bremsdrucks über den pneumatischen Backup ist je nach Fehlerart aber nicht immer die optimale Strategie, denn dabei bleibt ein trotz des Fehlerzustandes möglicherweise höheres Sicherheitsniveau der elektrischen Regelung ungenutzt. Je nach Fehlerart kann es sein, dass über die elektrische Bereitstellung des Bremsdrucks ein besseres Systemverhalten erzielt werden kann. Dies trifft insbesondere für Fehlerzustände zu, die auch den pneumatischen Backup-Pfad betreffen können. Indem bei einem erkannten Fehler nicht zwingend auf den pneumatischen Backup-Pfad umgeschaltet wird, kann eine Verbesserung des Systemverhaltens bei Fehlern im Drucksteller für Fahrzeug-Bremssysteme erreicht werden.

Ein Verfahren zum Betreiben eines Bremssystems für ein Fahrzeug, wobei das Bremssystem eine elektronische Stelleinrichtung zum Aussteuern eines Bremsdrucks für eine Bremse des Fahrzeugs in einem Normalbetriebsmodus und eine pneumatische Stelleinrichtung zum Aussteuern des Bremsdrucks in einem Backupbetriebsmodus aufweist, umfasst die folgenden Schritte:
Klassifizieren eines einen Fehler der elektronischen Stelleinrichtung anzeigenden Fehlersignals als ein Fehlersignal einer ersten Fehlerkategorie, wenn es sich bei dem Fehler um einen Fehler handelt, bei dem ein Umschalten von der mit dem Fehler behafteten elektronischen Stelleinrichtung zu der pneumatischen Stelleinrichtung zu einer Verbesserung der Aussteuerung des Bremsdrucks führt; und
Umschalten von der elektronischen Stelleinrichtung zu der pneumatischen Stelleinrichtung, um den Bremsdruck unter Verwendung der pneumatischen Stelleinrichtung auszusteuern, wenn es sich bei dem Fehlersignal um ein Fehlersignal der ersten Fehlerkategorie handelt.

Bei dem Fahrzeug kann es sich um ein straßengebundenes Fahrzeug, insbesondere ein Nutzfahrzeug handeln. Der Bremsdruck kann zum Aktivieren der Bremse, beispielsweise einer Betriebsbremse des Fahrzeugs, verwendet werden. Der Bremsdruck kann ansprechend auf eine Bremsanforderung des Fahrers oder eines Assistenzsystems des Fahrzeugs ausgesteuert werden. Die elektronische Stelleinrichtung kann ausgebildet sein, um den Bremsdruck gesteuert von einem elektrischen Steuersignal auszusteuern. Die pneumatische Stelleinrichtung kann ausgebildet sein, um den Bremsdruck gesteuert von einem pneumatischen Steuerdruck auszusteuern. Die elektronische Stelleinrichtung und die pneumatische Stelleinrichtung können unter Verwendung separater oder zumindest teilweise gemeinsam verwendeter Elemente realisiert sein. Beispielsweise kann ein Relaisventil vorgesehen sein, das im Betrieb der elektronischen Stelleinrichtung von der elektronischen Stelleinrichtung und im Betrieb der pneumatischen Stelleinrichtung von der pneumatischen Stelleinrichtung verwendet werden kann und somit sowohl als Bestandteil der elektronischen Stelleinrichtung als auch als Bestandteil der pneumatischen Stelleinrichtung angesehen werden kann. Das Verfahren ermöglicht eine Umschaltung von dem Normalbetriebsmodus in den Backupmodus, wenn dadurch eine Verbesserung des Systemverhaltens zu erwarten ist.

Beispielsweise kann das Fehlersignal als ein Fehlersignal der ersten Fehlerkategorie klassifiziert werden, wenn der Fehler auf eine elektrische Ursache in der elektronischen Stelleinrichtung zurückzuführen ist. Auch kann das Fehlersignal als ein Fehlersignal der ersten Fehlerkategorie klassifiziert werden, wenn der Fehler einen elektrischen Kurzschluss in einer der elektronischen Stelleinrichtung zugeordneten elektrischen Leitung anzeigt. Somit kann es sich bei sogenannten "Klasse 1"- Fehlern nicht nur um Kurzschlüsse, sondern um jede Art von Fehlern in der elektrischen Regelung handeln, die eindeutig erkennbar sind. Außer auf Kurzschlüsse trifft dies auch z.B. auf eine elektrische Leitungsunterbrechung, eine defekte Endstufe, einen Sensor im Fehlerband, ein defektes elektronisches Bauteil, auf Speicherfehler, wie RAM/ROM/EEPROM-Fehler, auf abgestürzte Software, usw. zu. Bei solchen Fehlern kann üblicherweise davon ausgegangen werden, dass sich das Systemverhalten durch die Verwendung des pneumatischen Backup-Pfads verbessern lässt.

Im Schritt des Klassifizierens kann das Fehlersignal als ein Fehlersignal der zweiten Fehlerkategorie klassifiziert werden, wenn es sich bei dem Fehler um einen Fehler handelt, bei dem ein Umschalten von der mit dem Fehler behafteten elektronischen Stelleinrichtung zu der pneumatischen Stelleinrichtung zu keiner Verbesserung der Aussteuerung des Bremsdrucks führt. Für diesen Fall kann das Verfahren einen Schritt des Beibehaltens der Verwendung der elektronischen Stelleinrichtung umfassen, um den Bremsdruck weiterhin unter Verwendung der elektronischen Stelleinrichtung auszusteuern, wenn es sich bei dem Fehlersignal um ein Fehlersignal der zweiten Fehlerkategorie handelt. Somit kann eine Umschaltung von dem Normalbetriebsmodus in den Backupbetriebsmodus vermieden werden, wenn dadurch keine Verbesserung oder gar eine Verschlechterung des Systemverhaltens zu erwarten ist.

Erfindungsgemäß soll im Schritt des Klassifizierens das Fehlersignal als ein Fehlersignal einer dritten Fehlerkategorie klassifiziert werden, wenn es sich bei dem Fehler um einen Fehler handelt, bei dem unsicher ist, ob ein Umschalten von der mit dem Fehler behafteten elektronischen Stelleinrichtung zu der pneumatischen Stelleinrichtung zu einer Verbesserung der Aussteuerung des Bremsdrucks führt. Für diesen Fall kann das Verfahren einen Schritt des zumindest temporären Umschaltens von der elektronischen Stelleinrichtung zu der pneumatischen Stelleinrichtung umfassen, um den Bremsdruck zumindest temporär unter Verwendung der pneumatischen Stelleinrichtung auszusteuern, wenn es sich bei dem Fehlersignal um ein Fehlersignal der dritten Fehlerkategorie handelt. Dies ermöglicht eine testweise Umschaltung von dem Normalbetriebsmodus in den Backupmodus. Auf diese Weise kann getestet werden, ob eine solche Umschaltung zu einer Verbesserung des Systemverhaltens führt. Ist dies der Fall, so kann die Umschaltung beibehalten werden. Ansonsten kann in den Normalbetriebsmodus zurückgeschaltet werden.

Beispielsweise kann im Schritt des Klassifizierens das Fehlersignal als ein Fehlersignal der dritten Fehlerkategorie klassifiziert werden, wenn es sich bei dem Fehler um einen Fehler handelt, der auf einem unplausiblen Druckverlauf in einer der elektronischen Stelleinrichtung zugeordneten pneumatischen Leitung basiert. In einem solchen Fall kann häufig nicht sicher vorausgesehen werden, ob die Umschaltung auf den pneumatischen Backup-Pfad zu einer Verbesserung des Systemverhaltens führt.

Das Verfahren kann einen Schritt des Erkennens umfassen, in dem erkannt werden kann, ob das Umschalten von der mit dem Fehler behafteten elektronischen Stelleinrichtung zu der pneumatischen Stelleinrichtung zu einer Verbesserung der Aussteuerung des Bremsdrucks führt oder, ob das Umschalten von der mit dem Fehler behafteten elektronischen Stelleinrichtung zu der pneumatischen Stelleinrichtung zu keiner Verbesserung der Aussteuerung des Bremsdrucks führt. Ferner kann das Verfahren einen Schritt des Zurückschaltens von der pneumatischen Stelleinrichtung zu der elektronischen Stelleinrichtung umfassen, um den Bremsdruck unter Verwendung der elektronischen Stelleinrichtung auszusteuern, wenn im Schritt des Erkennens erkannt wurde, dass das Umschalten von der mit dem Fehler behafteten elektronischen Stelleinrichtung zu der pneumatischen Stelleinrichtung zu keiner Verbesserung der Aussteuerung des Bremsdrucks führt. Auf diese Weise kann nach einem testweisen Umschalten in den Backupbetriebsmodus zu dem Normalbetriebsmodus zurückgekehrt werden, wenn sich ergeben hat, dass der Backupbetriebsmodus keine Verbesserung oder gar eine Verschlechterung gegenüber dem Normalbetriebsmodus darstellt.

Beispielsweise kann im Schritt des Erkennens ein erstes Systemverhalten während der Aussteuerung des Bremsdrucks unter Verwendung der elektronischen Stelleinrichtung mit einem zweiten Systemverhalten während der Aussteuerung des Bremsdrucks unter Verwendung der pneumatischen Stelleinrichtung verglichen werden. Durch einen Vergleich der beiden Systemverhalten kann erkannt werden, welcher der beiden Betriebsmodi, also der Normalbetriebsmodus oder der Backupbetriebsmodus, zu dem besseren Systemverhalten führt.

Das Systemverhalten kann beispielsweise über einen Druck innerhalb einer der Bremse zugeordneten pneumatischen Leitung, über eine Verzögerung des Fahrzeugs und zusätzlich oder alternativ über einen Schlupf eines der Bremse zugeordneten Rades definiert sein. Gemäß einer Ausführungsform wird als Bewertungskriterien nicht nur der Schlupf des betroffenen Rades, sondern auch der Differenzschlupf zwischen dem betroffenen Rad und einem anderen Rad des Fahrzeugs verwendet, da der Differenzschlupf besonders einfach messbar und aussagekräftig ist. Ferner kann das Systemverhalten über die Quelle des Ansteuersignals definiert sein. Unter der Quelle des Ansteuersignals kann der Fahrer oder ein Assistenzsystem verstanden werden. Dabei steht bei einem Assistenzsystem kein Backupdruck zur Verfügung.

Das Verfahren kann einen Schritt des Zurückschaltens von der pneumatischen Stelleinrichtung zu der elektronischen Stelleinrichtung umfassen, um den Bremsdruck unter Verwendung der elektronischen Stelleinrichtung auszusteuern. Ferner kann das Verfahren einen Schritt des Erkennens umfassen, in dem erkannt werden kann, ob das Zurückschalten von der pneumatischen Stelleinrichtung zu der elektronischen Stelleinrichtung zu einer Verbesserung der Aussteuerung des Bremsdrucks führt. Auf diese Weise kann beispielsweise in regelmäßigen Abständen oder ansprechend auf ein bestimmtes Ereignis überprüft werden, ob sich durch den Backupbetriebsmodus nach wie vor ein besseres Systemverhalten erreichen lässt als durch die Rückkehr in den Normalbetriebsmodus. Bei der Entscheidung über den Betriebsmodus kann auch berücksichtigt werden ob die Anforderung vom Fahrer oder von einem Assistenzsystem angefordert wird. Bei einer Anforderung über das Assistenzsystem kann über den pneumatischen Backup kein Druck ausgesteuert werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Der hier vorgestellte Ansatz schafft ferner eine Vorrichtung zum Betreiben des Bremssystems, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Ein Bremssystem für ein Fahrzeug weist die folgenden Merkmale auf:
eine elektronische Stelleinrichtung zum Aussteuern eines Bremsdrucks für eine Bremse des Fahrzeug in einem Normalbetriebsmodus;
eine pneumatischen Stelleinrichtung zum Aussteuern des Bremsdrucks in einem Backupmodus; und
eine genannte Vorrichtung zum Betreiben des Bremssystems.

Die Vorrichtung kann über geeignete Schnittstellen mit den Stelleinrichtungen gekoppelt sein, um eine Umschaltung zwischen den Stelleinrichtungen bewirken zu können.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung eines Bremssystems für ein Fahrzeug gemäß einem Ausführungsbeispiel;
- Fig. 2: eine Darstellung eines Drucksteuermoduls für ein Fahrzeug gemäß einem Ausführungsbeispiel;
- Fig. 3: eine schematische Darstellung eines Fahrzeugs mit einem Bremssystem gemäß einem Ausführungsbeispiel;
- Fig. 4: ein Ablaufdiagramm eines Verfahrens zum Betreiben eines Bremssystems für ein Fahrzeug gemäß einem Ausführungsbeispiel;
- Fig. 5: eine schematische Darstellung einer Vorrichtung zum Betreiben eines Bremssystems für ein Fahrzeug gemäß einem Ausführungsbeispiel;
- Fig. 6: ein Ablaufdiagramm eines Verfahrens zum Betreiben eines Bremssystems für ein Fahrzeug gemäß einem Ausführungsbeispiel; und
- Fig. 7: ein Ablaufdiagramm eines Verfahrens zum Betreiben eines Bremssystems für ein Fahrzeug gemäß einem weiteren Ausführungsbeispiel.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

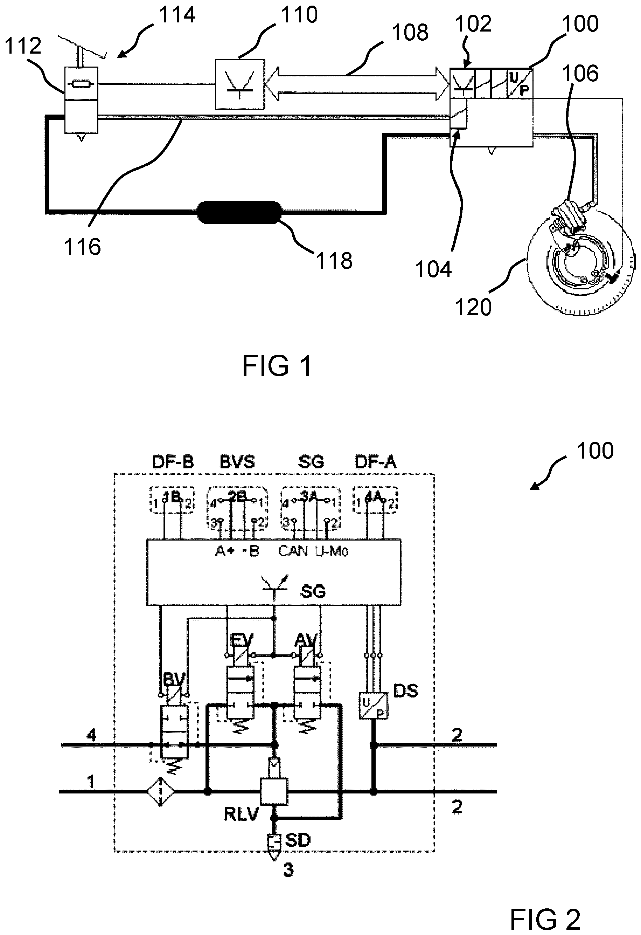

Fig. 1 zeigt eine Darstellung eines Bremssystems für ein Fahrzeug gemäß einem Ausführungsbeispiel. Das Bremssystem umfasst einen elektro - pneumatischen Modulator (EPM) 100 mit einer elektronischen Stelleinrichtung 102 und einer pneumatischen Stelleinrichtung 104 zum Aussteuern eines Bremsdrucks für eine Bremse 106 des Fahrzeugs. Bei dem Bremssystem kann es sich um ein bekanntes Bremssystem handeln, wie es beispielsweise im Nutzfahrzeugbereich eingesetzt wird.

Die elektronische Stelleinrichtung 102 ist ausgebildet, um den Bremsdruck nach einem Sollwert einzuregeln, den die elektronische Stelleinrichtung 102 gemäß diesem Ausführungsbeispiel über einen Brems-CAN-Bus 108 von einem Steuergerät 110 eines elektronischen Bremssystems (EBS_ECU) erhält. Das Steuergerät 110 ist über eine Leitung mit einem Sollwertaufnehmer 112 eines Fußbremsmoduls 114 des Fahrzeugs verbunden. Auf diese Weise kann eine von dem Fahrer des Fahrzeugs über das Fußbremsmodul angeforderte Bremsanforderung von dem Sollwertaufnehmer 112 erfasst und über das Steuergerät 110 an die elektronische Stelleinrichtung 102 weitergeleitet werden. Die elektronische Stelleinrichtung 102 ist ausgebildet, um einen der Bremsanforderung entsprechenden Bremsdruck für die Bremse 106 auszusteuern.

Das Fußbremsmodul 114 ist über eine pneumatische Backupleitung 116 mit der pneumatischen Stelleinrichtung 104 verbunden. Im Fehlerfall wird von einem Normalbetriebsmodus, in dem der Bremsdruck unter Verwendung der elektronischen Stelleinrichtung 102 bereitgestellt wird, in einen Backupbetriebsmodus umgeschaltet, in dem eine pneumatische Sollwertübermittlung direkt vom Fußbremsmodul 114 zum elektro - pneumatischen Modulator 100 erfolgt. In diesem Fall wird der der Bremsanforderung entsprechende Bremsdruck für die Bremse 106 unter Verwendung der der pneumatischen Stelleinrichtung 104 ausgesteuert. Die Funktion der pneumatischen Stelleinrichtung 104 ist gemäß einem Ausführungsbeispiel ähnlich einem Relaisventil.

In Fig. 1 ist ferner ein Vorratsbehälter 118 zum Bereitstellen eines zum Betrieb der Bremse 106 erforderlichen Betriebsdrucks sowie ein von der Bremse 106 zu bremsendes Rad 120 des Fahrzeugs gezeigt.

Gemäß einem Ausführungsbeispiel weist der elektro - pneumatische Modulator 100 ein Relaisventil auf, wie es nachfolgend anhand von Fig. 2 gezeigt ist. Das Relaisventil kann sowohl als Teil der pneumatischen Stelleinrichtung 104 als auch der elektrischen Stelleinrichtung 102 angesehen werden. Somit kann der elektro - pneumatische Modulator 100 ohne eine dinglich unterscheidbare, eigene pneumatische Stelleinrichtung ausgeführt sein. Ob der Druck elektrisch oder pneumatisch geregelt wird, ist gemäß einem Ausführungsbeispiel nur durch die Stellung eines Backup-Ventils (BV) bestimmt, wie es in Fig. 2 gezeigt ist. Ist das Backup-Ventil bestromt, so wird der Druck in der Steuerkammer des Relaisteils elektrisch eingeregelt. Ist das Backup-Ventil dagegen unbestromt, so wird die Steuerkammer des Relaisteils mit dem Druck vom Fußbremsmodul 114 verbunden.

Fig. 2 zeigt eine Darstellung eines Drucksteuermoduls 100 für ein Fahrzeug gemäß einem Ausführungsbeispiel. Bei dem Drucksteuermodul 100 kann es sich um den in Fig. 1 gezeigten elektro - pneumatischen Modulator handeln. Für den Backupbetriebsmodus weist das Drucksteuermodul 100 einen Anschluss "4" zum Rückhaltekreis auf. Ferner weist das Drucksteuermodul 100 einen Anschluss "1" zum Vorrat sowie zwei Anschlüsse "2" zu Bremszylindern auf. Ferner weist das das Drucksteuermodul 100 ein Modul "SG" für elektrische Anschlüsse auf. Gemäß diesem Ausführungsbeispiel weist das Drucksteuermodul 100 ein Backup-Magnetventil "BV", ein Einlass-Magnetventil "EV", ein Auslass-Magnetventil "AV", einen Drucksensor "DS", ein Relaisventil "RLV" und einen Schalldämpfer "SD" auf.

Im Normalbetriebsmodus wird der Bremsdruck über das Relaisventil "RLV" ausgesteuert, das wiederum unter Verwendung des elektronisch gesteuerten Einlass-Magnetventils und des elektronisch gesteuerten Auslass-Magnetventils angesteuert wird. Das Einlass-Magnetventil und das Auslass-Magnetventil können somit der elektronischen Stelleinrichtung zugeordnet werden. Im Backupbetriebsmodus wird der Bremsdruck ebenfalls über das Relaisventil "RLV" ausgesteuert, das nun jedoch über den Anschluss "4" und das auf Durchlass geschaltete Backup-Magnetventil "BV" pneumatisch angesteuert wird. Der Anschluss "4" und das pneumatisch angesteuerte Relaisventil können der pneumatischen Stelleinrichtung zugeordnet werden. Zwischen dem Normalbetriebsmodus und dem Backupbetriebsmodus kann unter Verwendung des Backup-Magnetventils umgeschaltet werden. Die in Fig. 2 gezeigte Stellung des Backup-Magnetventils bewirkt den Backupbetriebsmodus.

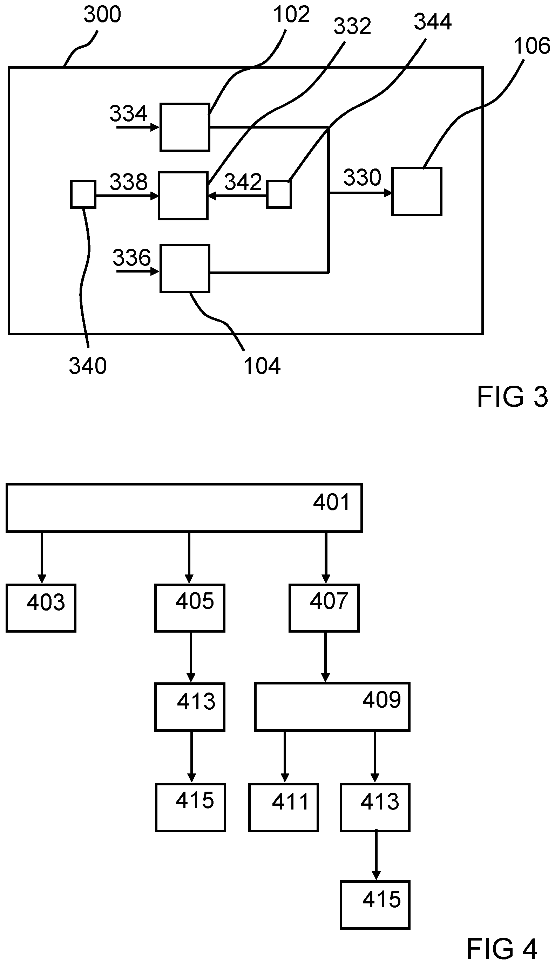

Fig. 3 zeigt eine schematische Darstellung eines Fahrzeugs 300 mit einem Bremssystem gemäß einem Ausführungsbeispiel. Das Bremssystem kann auf dem anhand von Fig. 1 beschriebenen Bremssystem basieren.

Das Bremssystem weist eine elektronische Stelleinrichtung 102 zum Aussteuern eines Bremsdrucks 330 für eine Bremse 106 des Fahrzeugs 300 in einem Normalbetriebsmodus und eine pneumatische Stelleinrichtung 104 zum Aussteuern des Bremsdrucks 330 in einem Backupmodus sowie eine Vorrichtung 332 zum Betreiben des Bremssystems auf.

Die elektronische Stelleinrichtung 102 ist ausgebildet, um den Bremsdruck unter Verwendung eines elektrischen Steuersignals 334 auszusteuern, das die elektronische Stelleinrichtung 102 beispielsweise über einen CAN-Bus empfangen kann. Die pneumatische Stelleinrichtung 104 ist ausgebildet, um den Bremsdruck unter Verwendung eines pneumatischen Steuersignals 336 auszusteuern, das die pneumatische Stelleinrichtung 104 beispielsweise über eine pneumatische Backup-Leitung empfangen kann.

Die Vorrichtung 332 ist ausgebildet, um ein Fehlersignal 338 von einer Fehlerüberwachungseinrichtung 340 zu empfangen. Die Fehlerüberwachungseinrichtung 340 ist ausgebildet, um einen Fehler der elektronischen Stelleinrichtung 102 oder einen eine Funktion der elektronischen Stelleinrichtung 102 beeinflussenden Fehler zu erkennen und das den Fehler anzeigende Fehlersignal 338 an die Vorrichtung 332 bereitzustellen. Die Vorrichtung 332 ist ausgebildet, um das Fehlersignal 338 auszuwerten, um anhand des Fehlersignals 338 zu entscheiden, ob der Bremsdruck 330 weiterhin unter Verwendung der elektronischen Stelleinrichtung 102 ausgesteuert wird, oder ob auf die pneumatische Stelleinrichtung 104 umgeschaltet wird, um den Bremsdruck 330 unter Verwendung der pneumatischen Stelleinrichtung 104 auszusteuern. Beispielsweise kann die Vorrichtung 332 ausgebildet sein, um die elektronische Stelleinrichtung 102 zu deaktivieren, um auf die pneumatische Stelleinrichtung 104 umzuschalten.

Gemäß einem Ausführungsbeispiel ist die Vorrichtung 332 ausgebildet, um ein Zustandssignal 342 von einer Einrichtung 344 zum Überwachen eines Systemverhaltens des Bremssystems zu empfangen. Die Einrichtung 344 ist ausgebildet, um das Systemverhalten zu überwachen und das das Systemverhalten anzeigende Zustandssignal 342 an die Vorrichtung 332 bereitzustellen. Die Vorrichtung 332 ist ausgebildet, um unter Verwendung des Zustandssignals 342 zu erkennen, ob das Bremssystem unter Verwendung der elektronischen Stelleinrichtung 102 oder der pneumatischen Stelleinrichtung 104 das bessere Systemverhalten aufweist.

Fig. 4 zeigt ein Ablaufdiagramm eines Verfahrens zum Betreiben eines Bremssystems für ein Fahrzeug gemäß einem Ausführungsbeispiel. Die Schritte des Verfahrens können unter Verwendung der in Fig. 3 gezeigten Vorrichtung zum Betreiben eines Bremssystems ausgeführt werden.

Das Verfahren umfasst einen Schritt 401, in dem ein Fehlersignal, beispielsweise das anhand von Fig. 3 beschriebene Fehlersignal, klassifiziert wird. Das Fehlersignal kann zu einem Zeitpunkt generiert worden sein, zu dem die elektronische Stelleinrichtung des Bremssystems verwendet wurde oder zur Verwendung vorgesehen war. Wenn das Fehlersignal einer erster Fehlerkategorie zugeordnet wird, gemäß der angenommen wird, dass ein Umschalten von der elektronischen Stelleinrichtung zu der pneumatischen Stelleinrichtung zu einer Verbesserung des Systemverhaltens des Bremssystems führt, so wird in einem Schritt 403 von der der elektronischen Stelleinrichtung zu der pneumatischen Stelleinrichtung umgeschaltet. Dies kann beispielsweise der Fall sein, wenn das Fehlersignal auf einen Kurzschluss hindeutet.

Wird das Fehlersignal im Schritt 401 des Klassifizierens dagegen einer zweiten Fehlerkategorie zugeordnet, gemäß der angenommen wird, dass ein Umschalten von der elektronischen Stelleinrichtung zu der pneumatischen Stelleinrichtung zu keiner Verbesserung oder gar zu einer Verschlechterung des Systemverhaltens des Bremssystems führt, so wird in einem Schritt 405 die Verwendung der elektronischen Stelleinrichtung beibehalten.

Wird das Fehlersignal im Schritt 401 des Klassifizierens einer dritten Fehlerkategorie zugeordnet, gemäß der nicht sicher vorhergesagt werden kann, ob ein Umschalten von der elektronischen Stelleinrichtung zu der pneumatischen Stelleinrichtung zu einer Verbesserung des Systemverhaltens führt, so wird in einem Schritt 407 zumindest zeitweise von der elektronischen Stelleinrichtung zu der pneumatischen Stelleinrichtung umgeschaltet. Dies kann beispielsweise der Fall sein, wenn das Fehlersignal auf einen unplausiblen Druckverlauf in der Pneumatik hindeutet.

Nach der zumindest temporären Umschaltung auf die pneumatische Stelleinrichtung wird in einem Schritt 409 erkannt, ob das Umschalten von der elektronischen Stelleinrichtung zu der pneumatischen Stelleinrichtung zu einer Verbesserung des Systemveraltens geführt hat. Eine Verbesserung des Systemverhaltens kann beispielsweise dadurch erkannt werden, dass zumindest ein das Systemverhalten charakterisierender Parameter zu einem Zeitpunkt nach der Umschaltung auf die pneumatische Stelleinrichtung erfasst und mit dem entsprechenden Parameter verglichen wird, der zu einem Zeitpunkt vor der Umschaltung auf die pneumatische Stelleinrichtung erfasst wurde. Ein solcher Parameter kann beispielsweise einen Druck innerhalb einer der Bremse zugeordneten pneumatischen Leitung, eine Verzögerung des Fahrzeugs oder einen Schlupf eines der Bremse zugeordneten Rades darstellen. Wird keine Verbesserung des Systemverhaltens erkannt, so wird in einem Schritt 411 von der pneumatischen Stelleinrichtung zu der elektronischen Stelleinrichtung zurückgeschaltet. Wird dagegen eine Verbesserung des Systemverhaltens erkannt, so wird die pneumatische Stelleinrichtung zumindest zeitweise beibehalten.

Nach dem Umschalten auf die pneumatische Stelleinrichtung wird gemäß einem Ausführungsbeispiel in einem Schritt 413 zeitgesteuert oder ereignisgesteuert von der pneumatischen Stelleinrichtung zu der elektronischen Stelleinrichtung zurückgeschaltet. In einem nachfolgenden Schritt 415 wird erkannt, ob das Zurückschalten von der pneumatischen Stelleinrichtung zu der elektronischen Stelleinrichtung zu einer Verbesserung der Aussteuerung des Bremsdrucks führt. Eine Verbesserung des Systemverhaltens kann wiederum dadurch erkannt werden, dass zumindest ein das Systemverhalten charakterisierender Parameter zu einem Zeitpunkt nach der im Schritt 413 erfolgten Umschaltung auf die elektronische Stelleinrichtung erfasst und mit dem entsprechenden Parameter verglichen wird, der zu einem Zeitpunkt vor der Umschaltung auf die elektronische Stelleinrichtung erfasst wurde. Wenn im Schritt 415 erkannt wird, dass die Umschaltung zu einer Verbesserung führt, so wird die Verwendung der elektronischen Stelleinrichtung beibehalten. Ansonsten wird wieder zu der pneumatischen Stelleinrichtung zurückgeschaltet. In diesem Fall können die Schritte 413, 415 zu einem späteren Zeitpunkt erneut ausgeführt werden, um zu überprüfen, ob die Verwendung der pneumatischen Stelleinrichtung weiterhin sinnvoll ist.

Die beschriebenen Schritte 405, 407, 409, 411, 413, 415 sind optional, sodass die Schritte 401, 403 des Verfahrens mit einem, mehreren oder allen der Schritte 405, 407, 409, 411, 413, 415 ergänzt werden können.

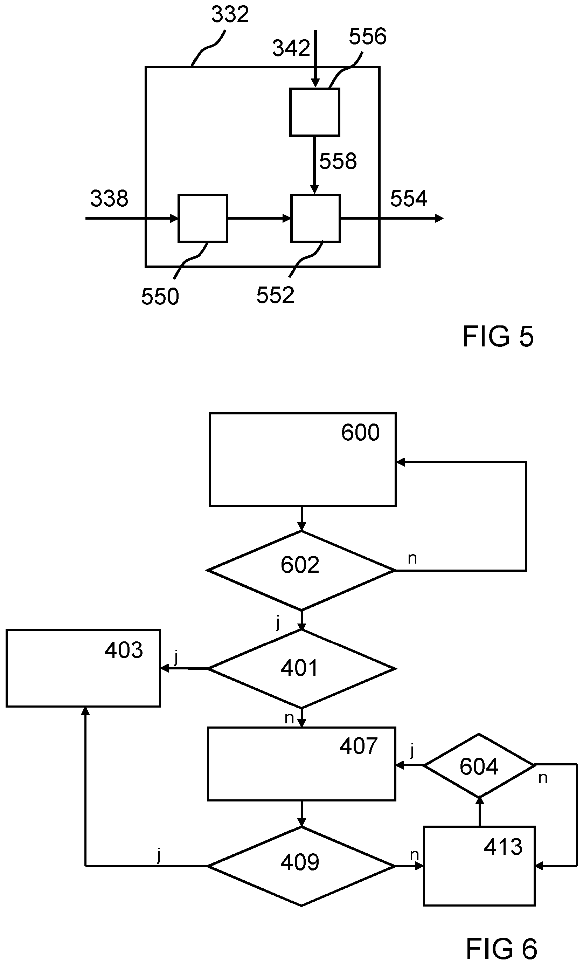

Fig. 5 zeigt eine schematische Darstellung einer Vorrichtung 332 zum Betreiben eines Bremssystems für ein Fahrzeug gemäß einem Ausführungsbeispiel. Die Vorrichtung 332 ist gemäß einem Ausführungsbeispiel ausgebildet, um alle oder einige der Schritte des anhand von Fig. 4 beschriebenen Verfahrens auszuführen. Um den Schritt des Klassifizierens des Fehlersignals 338 ausführen zu können, weist die Vorrichtung 332 eine Klassifizierungseinrichtung 550 auf. Um die Schritte des Umschaltens ausführen zu können, weist die Vorrichtung 332 eine Schalteinrichtung 552 auf, die beispielsweise ausgebildet ist, um ein Schaltsignal 554 bereitzustellen, das geeignet ist, um ein Umschalten zwischen der elektronischen und der pneumatischen Stelleinrichtung zu bewirken. Um zu erkennen, ob durch ein Umschalten zwischen den Stelleinrichtungen eine Verbesserung des Systemverhaltens erzielt werden konnte, weist die Vorrichtung 332 optional eine Erkennungseinrichtung 556 auf, die ausgebildet ist, um unter Verwendung eines internen Sensors oder des Zustandssignals 342 eine Verbesserung des Systemverhaltens zu erkennen und ein die Verbesserung oder gegebenenfalls Verschlechterung des Systemverhaltens anzeigendes Signal 558 an die Schalteinrichtung 552 bereitzustellen.

Fig. 6 zeigt ein Ablaufdiagramm eines Verfahrens zum Betreiben eines Bremssystems für ein Fahrzeug gemäß einem Ausführungsbeispiel. Die Schritte des Verfahrens können beispielsweise von einer im vorangegangenen beschriebenen Vorrichtung zum Betreiben eines Bremssystems umgesetzt werden.

Das Verfahren beginnt in einem Zustand 600 der elektrischen Regelung. Dabei kann es sich um den bereits beschriebenen Normalbetriebszustand handeln, in dem der Bremsdruck unter Verwendung einer elektronischen Stelleinrichtung geregelt oder ausgesteuert wird. In einem Schritt 602 wird überprüft, ob ein Fehler erkannt wird. Ist dies nicht der Fall, so wir der Zustand 600 der elektrischen Regelung beibehalten. Wird dagegen ein Fehler erkannt, so wird in einem Schritt des Klassifizierens 401 überprüft, ob es sich bei dem im Schritt 602 erkannten Fehler um einen - hier beispielhaft genannt - elektrischen Fehler handelt. Wenn es sich um einen elektrischen Fehler handelt der unter Berücksichtigung der Anforderung (Fahrer/Asistenzsystem) im Backup eindeutig das bessere Systemverhalten zeigt, so wird in einem Schritt 403 permanent auf eine pneumatische Backup-Regelung geschaltet. Dazu kann in den bereits beschriebenen Backupbetriebsmodus geschaltet werden, in dem der Bremsdruck unter Verwendung einer pneumatischen Stelleinrichtung ausgesteuert wird. Handelt es sich dagegen nicht um einen elektrischen Fehler, so wird in einem Schritt 407 eine temporäre pneumatische Drucksteuerung durchgeführt. Es wird also beispielsweise temporär in den Backupbetriebsmodus geschaltet. In einem Schritt 409 wird überprüft, ob sich das Verhalten durch die im Schritt 407 eingeleitete temporäre pneumatische Drucksteuerung verbessert hat. Ist dies der Fall, so wird der Schritt 403 ausgeführt und es wird auf eine permanente pneumatische Backup-Regelung geschaltet. Hat sich das Verhalten dagegen nicht verbessert, so wird in einem Schritt 413 eine temporäre elektrische Regelung durchgeführt. In einem Schritt 604 wird überprüft, ob ein Zeitablauf erfolgt ist. Ist dies nicht der Fall, so wird bei der temporären elektrischen Regelung geblieben, ansonsten wird auf die temporäre pneumatische Drucksteuerung zurückgeschaltet, indem der Schritt 407 erneut ausgeführt wird.

Somit wird auf Backup geblieben, nachdem sich nach dem temporären Backup eine Verbesserung ergeben hat, die im Schritt 409 erkannt wurde. Sollte sich die Backup-Regelung als schlechter erwiesen und deshalb im Schritt 413 wieder zurück auf die elektrische Regelung geschaltet werden, so kann optional von Zeit zu Zeit mal wieder durch temporäres Schalten auf Backup nachgeprüft werden, ob denn nun vielleicht der Backup günstiger ist. Somit kann der Schritt 604 als optional angesehen werden. Hat sich aber irgendwann ergeben, dass die pneumatische Backup-Regelung die bessere ist, so wird im Normalfall dabei geblieben. Optional kann aber auch dann - als untergeordnete Variante - von Zeit zu Zeit temporär mal wieder der Versuch einer elektrischen Regelung unternommen werden.

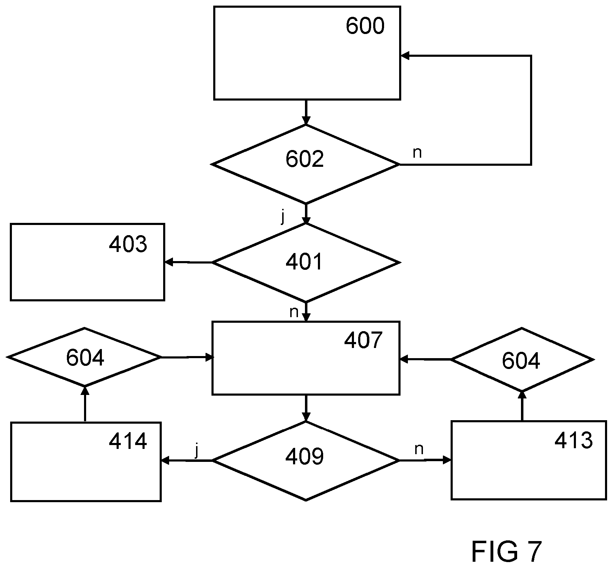

Fig. 7 zeigt ein Ablaufdiagramm eines Verfahrens zum Betreiben eines Bremssystems für ein Fahrzeug gemäß einem weiteren Ausführungsbeispiel. Das Verfahren entspricht dem anhand von Fig. 6 beschriebenen Verfahren, umfasst jedoch zusätzliche Schritte 414, 604. Wie bereits ausgeführt, wird in dem Schritt 409 überprüft, ob sich das Verhalten durch die im Schritt 407 eingeleitete temporäre pneumatische Drucksteuerung verbessert hat. Ist dies nicht der Fall, so wird zu dem Schritt 413 gesprungen und temporär auf die elektrische Regelung geschaltet. Wenn sich dagegen das Verhalten verbessert hat, wird in einem Schritt 414 eine temporäre pneumatische Backup Regelung durchgeführt. Anschließend wird in einem Schritt 604 überprüft, ob ein Zeitablauf erfolgt ist. Nach Auftreten des Zeitablaufs wird zu dem Schritt 407 zurückgekehrt und erneut eine temporäre Umschaltung in die andere Betriebsart durchgeführt.

Im Folgenden werden anhand der vorangegangenen Figuren Ausführungsbeispiele näher beschrieben.

Nach einer Fehlererkennung im Stellglied 102 wird das Stellglied 102 nur bei Fehlern, bei denen bekannt ist, dass sich das Systemverhalten im Backup verbessert, in den Backup Mode geschaltet 403. Eindeutig kann dies im Allgemeinen z.B. bei elektrischen Fehlern (Kurzschluss, Leitungsriss) festgestellt werden. Bei Fehlererkennungen, bei denen die Fehlerursache nicht eindeutig festgestellt werden kann (z.B. unplausible Reaktion der Drucksensorwerte nach Magnetventilaktivitäten), wird das Stellglied 102 zunächst "probeweise" in einen Mode geschaltet 407 in dem der Bremsdruck 330 durch den BackupDruck bestimmt wird, die Sensorik 344 jedoch weiterhin betrieben um die Systemreaktion zu beobachten. Durch einen Vergleich 409 des Systemverhaltens der beiden Modi wird entschieden, ob weiterhin im Backup-Betrieb geblieben oder zur elektrischen Regelung zurückgeschaltet wird.

Erweist sich die elektrische Regelung als vorteilhaft, so wird diese fortgeführt. Insbesondere können bei der elektrischen Bereitstellung des Bremsdrucks 330 weitere Funktionen wie z.B. ABS, ESP, AEBS (Notbremsassistent) aufrechterhalten werden.

Als Kriterium, ob die elektrische oder die Backupregelung günstiger ist, kann z.B. die Differenz oder das Verhältnis eines gewünschten Bremsdrucks zum tatsächlich erreichten Bremsdruck 330 jeweils in den beiden Modi herangezogen werden. Auch der Gradient der Druckänderung in die gewünschte Richtung nach dem Umschalten kann als ein Kriterium verwendet werden. Durch den Vergleich der Druckinformation im elektrischen Betrieb und im Backupbetrieb wird entschieden, welcher Mode der für das Systemverhalten günstigere Mode ist.

Als weitere Kriterien für diese Entscheidung könne die erreichte Verzögerung oder der erreichte Schlupf des entsprechenden Rades oder der erreichte Differenzschlupf des entsprechenden Rades im Vergleich zu anderen Rädern verwendet werden.

Da sich das Systemverhalten mit den Veränderungen in den Umgebungsbedingungen verändert, ist es günstig, den Test, welche Betriebsart das günstigere Systemverhalten ergibt, periodisch zu wiederholen. Die Kriterien für die Wiederholung kann z.B. eine festgelegte Zeit, eine Druckschwelle des ausgesteuerten Drucks, ein Druckverlauf des ausgesteuerten Drucks, eine Druckschwelle des Vorratsdrucks, ein Druckverlauf des Vorratsdrucks sein.

Wie bereits ausgeführt, können bei der elektrischen Bereitstellung des Bremsdrucks weitere Funktionen wie z.B. ABS aufrechterhalten werden. Wenn bei der Erkennung des Fehlers nicht zuverlässig festgestellt werden kann, ob der elektrische oder der pneumatische Backup-Pfad die für das Systemverhalten günstigere Variante darstellt, kann dies durch einen Vergleich des Systemverhaltens der beiden Modi ermittelt werden.

Bei Fehlererkennungen, bei denen die Fehlerursache nicht eindeutig festgestellt werden kann, wird das Stellglied 100 in einen Mode geschaltet, in dem der Bremsdruck durch den Backupdruck bestimmt wird, jedoch die Druckinformation dem System weiterhin bekannt ist. Durch den Vergleich der Druckinformation im elektrischen und Backupbetrieb wird entschieden, welcher Mode der für das Systemverhalten günstigere Mode ist.

Da sich das Systemverhalten mit den Veränderungen in den Umgebungsbedingungen verändert ist es günstig den Test welche Betriebsart das günstigere Systemverhalten ergibt ist periodisch zu wiederholen. Die Kriterien für die Wiederholung kann z.B. eine festgelegte Zeit, eine Druckschwelle des ausgesteuerten Drucks, ein Druckverlauf des ausgesteuerten Drucks, eine Druckschwelle des Vorratsdrucks, ein Druckverlauf des Vorratsdrucks sein.

Für die Beurteilung des Systemverhaltens kann der ein Vergleich von gewünschtem Druck zu tatsächlich vorhandenem Druck oder der Unterschied zwischen den beiden Modi herangezogen werden.

Ein weiteres Kriterium für die Umschaltung in den anderen Mode kann die erzielbare Verzögerung des Fahrzeugs 300 oder des Rades 120 sein. Sinkt die erzielbare Verzögerung unter den gesetzlich geforderten Wert, wird auf den anderen Mode umgeschaltet. Ist nach der Umschaltung eine Verbesserung der Verzögerung vorhanden, wird der Mode beibehalten, ansonsten wird der Mode wieder zurückgewechselt.

Eine weitere Ausführung kann sein, dass nach einem einmaligen Test der Backup Mode beibehalten wird.

Die Verzögerung kann aus dem erzielten Bremsdruck 330 abgeleitet oder durch Messung der Fahrzeugverzögerung durch Beobachtung der Radgeschwindigkeit oder eines Sensors (Beschleunigung, GPS, ...) 344 bestimmt werden.

Die beschriebenen Ausführungsbeispiele sind nur beispielhaft gewählt und können miteinander kombiniert werden.

### Bezugszeichenliste

- 100: elektro - pneumatischen Modulator (EPM)
- 102: elektronische Stelleinrichtung
- 104: pneumatische Stelleinrichtung
- 106: Bremse
- 108: Brems-CAN-Bus
- 110: Steuergerät
- 112: Sollwertaufnehmer
- 114: Fußbremsmodul
- 116: pneumatische Backupleitung
- 118: Vorratsbehälter
- 120: Rad

- 300: Fahrzeug
- 330: Bremsdrucks
- 332: Vorrichtung zum Betreiben eines Bremssystems
- 334: elektrisches Steuersignal
- 336: pneumatisches Steuersignal
- 338: Fehlersignal
- 340: Fehlerüberwachungseinrichtung
- 342: Zustandssignal
- 344: Einrichtung zum Überwachen eines Systemverhaltens des Bremssystems

- 401: Schritt des Klassifizierens
- 403: Schritt des Umschaltens
- 405: Schritt des Beibehaltens
- 407: Schritt des zumindest temporären Umschaltens
- 409: Schritt des Erkennens
- 411: Schritt des Zurückschaltens
- 413: Schritt des Umschaltens (temp elektrisch)
- 414: Schritt des Umschaltens (temp. Backup)
- 415: Schritt des Erkennens

- 550: Klassifizierungseinrichtung
- 552: Schalteinrichtung
- 554: Schaltsignal
- 556: Erkennungseinrichtung
- 558: Signal

- 600: Zustand der elektrischen Regelung
- 602: Schritt des Überprüfens
- 604: Schritt des Überprüfens

## Patentansprüche

1. Verfahren zum Betreiben eines Bremssystems für ein Fahrzeug (300), wobei das Bremssystem eine elektronische Stelleinrichtung (102) zum Aussteuern eines Bremsdrucks (330) für eine Bremse (106) des Fahrzeugs (300) in einem Normalbetriebsmodus und eine pneumatische Stelleinrichtung (104) zum Aussteuern des Bremsdrucks (330) in einem Backupbetriebsmodus aufweist, und wobei das Verfahren die folgenden Schritte umfasst:
Klassifizieren (401) eines einen Fehler der elektronischen Stelleinrichtung (102) anzeigenden Fehlersignals (338) als ein Fehlersignal (338) einer ersten Fehlerkategorie, wenn es sich bei dem Fehler um einen Fehler handelt, bei dem ein Umschalten von der mit dem Fehler behafteten elektronischen Stelleinrichtung (102) zu der pneumatischen Stelleinrichtung (104) zu einer Verbesserung der Aussteuerung des Bremsdrucks (330) führt; und
Umschalten (403) von der elektronischen Stelleinrichtung (102) zu der pneumatischen Stelleinrichtung (104), um den Bremsdruck (330) unter Verwendung der pneumatischen Stelleinrichtung (104) auszusteuern, wenn es sich bei dem Fehlersignal (338) um ein Fehlersignal (338) der ersten Fehlerkategorie handelt,
**dadurch gekennzeichnet, dass**
im Schritt (401) des Klassifizierens das Fehlersignal (338) als ein Fehlersignal (338) einer weiteren Fehlerkategorie klassifiziert wird, wenn es sich bei dem Fehler um einen Fehler handelt, bei dem unsicher ist, ob ein Umschalten von der mit dem Fehler behafteten elektronischen Stelleinrichtung (102) zu der pneumatischen Stelleinrichtung (104) zu einer Verbesserung der Aussteuerung des Bremsdrucks (330) führt, und mit einem Schritt (407) des zumindest temporären Umschaltens von der elektronischen Stelleinrichtung (102) zu der pneumatischen Stelleinrichtung (104), um den Bremsdruck (330) zumindest temporär unter Verwendung der pneumatischen Stelleinrichtung (104) auszusteuern, wenn es sich bei dem Fehlersignal (338) um ein Fehlersignal (338) der weiteren Fehlerkategorie handelt.

2. Verfahren gemäß Anspruch 1, bei dem das Fehlersignal (338) als ein Fehlersignal (338) der ersten Fehlerkategorie klassifiziert wird, wenn der Fehler auf eine elektrische Ursache in der elektronischen Stelleinrichtung (102) zurückzuführen ist.

3. Verfahren gemäß einem der vorangegangenen Ansprüche, bei dem im Schritt (401) des Klassifizierens das Fehlersignal (338) als ein Fehlersignal (338) einer zweiten Fehlerkategorie klassifiziert wird, wenn es sich bei dem Fehler um einen Fehler handelt, bei dem ein Umschalten von der mit dem Fehler behafteten elektronischen Stelleinrichtung (102) zu der pneumatischen Stelleinrichtung (104) zu keiner Verbesserung der Aussteuerung des Bremsdrucks (330) führt, und wobei das Verfahren einen Schritt (405) des Beibehaltens der Verwendung der elektronischen Stelleinrichtung (102) umfasst, um den Bremsdruck (330) weiterhin unter Verwendung der elektronischen Stelleinrichtung (102) auszusteuern, wenn es sich bei dem Fehlersignal (338) um ein Fehlersignal (338) der zweiten Fehlerkategorie handelt.

4. Verfahren gemäß einem der vorangegangenen Ansprüche, bei dem im Schritt (401) des Klassifizierens das Fehlersignal (338) als ein Fehlersignal (338) der weiteren Fehlerkategorie klassifiziert wird, wenn es sich bei dem Fehler um einen Fehler handelt, der auf einem unplausiblen Druckverlauf in einer der elektronischen Stelleinrichtung (102) zugeordneten pneumatischen Leitung basiert.

5. Verfahren gemäß einem der vorangegangenen Ansprüche, mit einem Schritt (409) des Erkennens, ob das Umschalten von der mit dem Fehler behafteten elektronischen Stelleinrichtung (102) zu der pneumatischen Stelleinrichtung (104) zu einer Verbesserung der Aussteuerung des Bremsdrucks (330) führt oder ob das zumindest temporäre Umschalten (407) von der mit dem Fehler behafteten elektronischen Stelleinrichtung (102) zu der pneumatischen Stelleinrichtung (104) zu keiner Verbesserung der Aussteuerung des Bremsdrucks (330) führt, und mit einem Schritt des Zurückschaltens (411) von der pneumatischen Stelleinrichtung (104) zu der elektronischen Stelleinrichtung (102), um den Bremsdruck (330) unter Verwendung der elektronischen Stelleinrichtung (102) auszusteuern, wenn im Schritt (409) des Erkennens erkannt wurde, dass das zumindest temporäre Umschalten (407) von der mit dem Fehler behafteten elektronischen Stelleinrichtung (102) zu der pneumatischen Stelleinrichtung (104) zu keiner Verbesserung der Aussteuerung des Bremsdrucks (330) führt.

6. Verfahren gemäß Anspruch 5, bei dem im Schritt (409) des Erkennens ein erstes Systemverhalten während der Aussteuerung des Bremsdrucks (330) unter Verwendung der elektronischen Stelleinrichtung (102) mit einem zweiten Systemverhalten während der Aussteuerung des Bremsdrucks (330) unter Verwendung der pneumatischen Stelleinrichtung (104) verglichen wird.

7. Verfahren gemäß Anspruch 6, bei dem das Systemverhalten über einen Druck innerhalb einer der Bremse (106) zugeordneten pneumatischen Leitung, und/oder eine Verzögerung des Fahrzeugs (300) und/oder einen Schlupf eines der Bremse (106) zugeordneten Rades (120) und/oder über die Quelle des Ansteuersignals definiert ist.

8. Verfahren gemäß einem der vorangegangenen Ansprüche, mit einem Schritt (413) des Zurückschaltens von der pneumatischen Stelleinrichtung (104) zu der elektronischen Stelleinrichtung (102), um den Bremsdruck (330) unter Verwendung der elektronischen Stelleinrichtung (102) auszusteuern und einem Schritt des Erkennens (415), ob das Zurückschalten von der pneumatischen Stelleinrichtung (104) zu der elektronischen Stelleinrichtung (102) zu einer Verbesserung der Aussteuerung des Bremsdrucks (330) führt.

9. Computer-Programmprodukt mit Programmcode zur Durchführung des Verfahrens nach einem der vorangegangenen Ansprüche, wenn das Computer-Programmprodukt auf einer Vorrichtung ausgeführt wird.

10. Vorrichtung (332) zum Betreiben eines Bremssystems für ein Fahrzeug (300), wobei das Bremssystem eine elektronische Stelleinrichtung (102) zum Aussteuern eines Bremsdrucks (330) für eine Bremse (106) des Fahrzeugs (300) in einem Normalbetriebsmodus und eine pneumatische Stelleinrichtung (104) zum Aussteuern des Bremsdrucks (330) in einem Backupbetriebsmodus aufweist, und wobei die Vorrichtung ausgebildet ist, um die Schritte des Verfahrens gemäß einem der Ansprüche 1 bis 8 auszuführen.

11. Bremssystem für ein Fahrzeug (300), wobei das Bremssystem die folgenden Merkmale aufweist:
eine elektronische Stelleinrichtung (102) zum Aussteuern eines Bremsdrucks (330) für eine Bremse (106) des Fahrzeug (300) in einem Normalbetriebsmodus;
eine pneumatischen Stelleinrichtung zum Aussteuern des Bremsdrucks (330) in einem Backupmodus; und
eine Vorrichtung (332) gemäß Anspruch 10 zum Betreiben des Bremssystems.

## Claims

1. Method for operating a brake system for a vehicle (300), wherein the brake system comprises an electronic actuating device (102) for outputting a brake pressure (330) for a brake (106) of the vehicle (300) in a normal operating mode and a pneumatic actuating device (104) for outputting the brake pressure (330) in a backup operating mode, and wherein the method comprises the following steps:
classifying (401) a fault signal (338), which indicates a fault of the electronic actuating device (102), as a fault signal (338) of a first fault category if the fault is a fault in the case of which a switchover from the electronic actuating device (102) afflicted with the fault to the pneumatic actuating device (104) leads to an improvement in the outputting of the brake pressure (330); and
switching (403) from the electronic actuating device (102) to the pneumatic actuating device (104), in order to output the brake pressure (330) using the pneumatic actuating device (104), if the fault signal (338) is a fault signal (338) of the first fault category.
**characterised in that**,
in the step (401) of classifying, the fault signal (338) is classified as a fault signal (338) of a further fault category, if the fault is a fault in the case of which it is uncertain whether a switchover from the electronic actuating device (102) afflicted with the fault to the pneumatic actuating device (104) leads to an improvement in the outputting of the brake pressure (330), and having a step (407) of at least temporarily switching over from the electronic actuating device (102) to the pneumatic actuating device (104), in order to at least temporarily output the brake pressure (330) using the pneumatic actuating device (104), if the fault signal (338) is a fault signal (338) of the further fault category.

2. Method according to claim 1, in which the fault signal (338) is classified as a fault signal (338) of the first fault category if the fault can be attributed to an electrical cause in the electronic actuating device (102).

3. Method according to any of the preceding claims, in which, in the step (401) of classifying, the fault signal (338) is classified as a fault signal (338) of a second fault category if the fault is a fault in the case of which a switchover from the electronic actuating device (102) afflicted with the fault to the pneumatic actuating device (104) leads to no improvement in the outputting of the brake pressure (330), and wherein the method comprises a step (405) of maintaining the use of the electronic actuating device (102), in order to continue to output the brake pressure (330) using the electronic actuating device (102), if the fault signal (338) is a fault signal (338) of the second fault category.

4. Method according to any of the preceding claims, in which, in the step (401) of classifying, the fault (338) is classified as a fault signal (338) of the further fault category if the fault is a fault which is based on an implausible pressure profile in a pneumatic line assigned to the electronic actuating device (102).

5. Method according to any of the preceding claims, having a step (409) of identifying whether the switchover from the electronic actuating device (102) afflicted with the fault to the pneumatic actuating device (104) leads to an improvement in the outputting of the brake pressure (330) or whether the at least temporary switchover (407) from the electronic actuating device (102) afflicted with the fault to the pneumatic actuating device (104) leads to no improvement in the outputting of the brake pressure (330), and having a step of switching back (411) from the pneumatic actuating device (104) to the electronic actuating device (102), in order to output the brake pressure (330) using the electronic actuating device (102), if, in the step (409) of identifying, it has been identified that the at least temporary switchover (407) from the electronic actuating device (102) afflicted with the fault to the pneumatic actuating device (104) leads to no improvement in the outputting of the brake pressure (330).

6. Method according to claim 5, in which, in the step (409) of identifying, a first system characteristic during the outputting of the brake pressure (330) using the electronic actuating device (102) is compared with a second system characteristic during the outputting of the brake pressure (330) using the pneumatic actuating device (104).

7. Method according to claim 6, in which the system characteristic is defined by means of a pressure within a pneumatic line assigned to the brake (106), and/or a deceleration of the vehicle (300) and/or a slip of a wheel (120) assigned to the brake (106) and/or by means of the source of the actuation signal.

8. Method according to any of the preceding claims, having a step (413) of switching back from the pneumatic actuating device (104) to the electronic actuating device (102) in order to output the brake pressure (330) using the electronic actuating device (102), and a step of identifying (415) whether the switching back from the pneumatic actuating device (104) to the electronic actuating device (102) leads to an improvement in the outputting of the brake pressure (330).

9. Computer programme having programme code for carrying out the method according to any of the preceding claims if the computer programme product is executed on an apparatus.

10. Device (332) for operating a brake system for a vehicle (300), wherein the brake system has an electronic actuating device (102) for outputting a brake pressure (330) for a brake (106) of the vehicle (300) in a normal operating mode and a pneumatic actuating device (104) for outputting the brake pressure (330) in a backup operating mode, and wherein the device is designed to carry out the steps of the method according to any of the preceding claims.

11. Brake system for a vehicle (300), wherein the brake system has the following features:
an electronic actuating device (102) for outputting a brake pressure (330) for a brake (106) of the vehicle (300) in a normal operating mode;
a pneumatic actuating device for outputting the brake pressure (330) in a backup mode; and
a device (332) according to claim 10 for operating the brake system.

## Revendications

1. Procédé pour faire fonctionner un système de frein d'un véhicule (300), le système de frein comprenant un dispositif (102) électronique de réglage pour la commande d'une pression (330) de frein pour un frein (106) du véhicule (300) dans un mode de fonctionnement normal et un dispositif (104) pneumatique de réglage pour la commande de la pression (330) de frein dans un mode de fonctionnement de sécurité, et dans lequel le procédé comprend les stades suivants :
classement (401) d'un signal (338) de défaut indiquant un défaut du dispositif (102) électronique de réglage sous la forme d'un signal (338) de défaut, d'une première catégorie de défaut lorsque le défaut est un défaut dans lequel un passage du dispositif (102) électronique de réglage entaché du défaut au dispositif (104) pneumatique de réglage conduit à une amélioration de la commande de la pression (330) de frein ; et
le passage (403) du dispositif (102) électronique de réglage au dispositif (104) pneumatique de réglage pour commander la pression (330) de frein en utilisant le dispositif (104) pneumatique de réglage, si le signal (338) de défaut est un signal (338) de défaut de la première catégorie de défaut,
**caractérisé en ce que**
dans le stade (401) du classement, on classe le signal (338) de défaut comme un signal (338) de défaut d'une autre catégorie de défaut, si le défaut est un défaut dans lequel on n'est pas sûr qu'un passage du dispositif (102) électronique de réglage entaché du défaut au dispositif (104) pneumatique de réglage donne une amélioration de la commande de la pression (330) de frein,
et comprenant un stade (407) du passage au moins temporaire du dispositif (102) électronique de réglage au dispositif (104) pneumatique de réglage pour commander la pression (330) de frein au moins temporairement en utilisant le dispositif (104) pneumatique de réglage, si le signal (338) de défaut est un signal (338) de défaut de l'autre catégorie de défaut.

2. Procédé suivant la revendication 1, dans lequel on classe le signal (338) de défaut comme un signal (338) de défaut de la première catégorie de défaut, si le défaut se ramène à une cause électrique dans le dispositif (102) électronique de réglage.

3. Procédé suivant l'une des revendications précédentes, dans lequel dans le stade (401) du classement, on classe le signal (338) de défaut comme un signal (338) de défaut d'une deuxième catégorie de défaut, si le défaut est un défaut dans lequel un passage du dispositif (102) électronique de réglage entaché du défaut au dispositif (104) pneumatique de réglage ne donne pas d'amélioration de la commande de la pression (330) de frein et dans lequel le procédé comprend un stade (405) de maintien de l'utilisation du dispositif (102) électronique de réglage pour continuer à commander la pression (330) de frein en utilisant le dispositif (102) électronique de réglage, si le signal (338) de défaut est un signal (338) de défaut de la deuxième catégorie de défaut.

4. Procédé suivant l'une des revendications précédentes, dans lequel dans le stade (401) du classement, on classe le signal (338) de défaut comme un signal (338) de défaut de l'autre catégorie de défaut si le défaut est un défaut qui repose sur une courbe de pression invraisemblable dans une ligne pneumatique associée au dispositif (102) électronique de commande.

5. Procédé suivant l'une des revendications précédentes, comprenant un stade (409) de détection du point de savoir si le passage du dispositif (102) électronique de réglage entaché du défaut au dispositif (104) pneumatique de réglage donne une amélioration de la commande de la pression (330) de frein ou si le passage (407) temporaire du dispositif (102) électronique de réglage entaché du défaut au dispositif (104) pneumatique de réglage ne donne pas d'amélioration de la commande de la pression (330) de frein et comprenant un stade de retour (411) du dispositif (104) pneumatique de réglage au dispositif (102) électronique de réglage, pour commander la pression (330) de frein en utilisant le dispositif (102) électronique de réglage si dans le stade (409) de la détection il a été détecté que le passage (407) au moins temporaire du dispositif (102) électronique de réglage entaché du défaut au dispositif (104) pneumatique de réglage ne donne pas d'amélioration de la commande de la pression (330) de frein.

6. Procédé suivant la revendication 5, dans lequel dans le stade (409) de la détection on compare un premier comportement de système pendant la commande de la pression (330) de frein en utilisant le dispositif (102) électronique de commande à un deuxième comportement de système pendant la commande de la pression (330) de frein en utilisant le dispositif (104) pneumatique de réglage.

7. Procédé suivant la revendication 6, dans lequel le comportement de système est défini par une pression dans une ligne pneumatique associée au frein (106) et/ou une décélération du véhicule (300) et/ou un glissement d'une roue (120) associée au frein (106) et/ou par la source du signal de commande.

8. Procédé suivant l'une des revendications précédentes, comprenant un stade (413) de retour du dispositif (104) pneumatique de réglage au dispositif (102) électronique de réglage pour commander la pression (330) de frein en utilisant le dispositif (102) électronique de réglage et un stade de détection (415) du point de savoir si le retour du dispositif (104) pneumatique de réglage au dispositif (102) électronique de réglage donne une amélioration de la commande de la pression (330) de frein.

9. Produit de programme d'ordinateur ayant des codes de programme pour effectuer le procédé suivant l'une des revendications précédentes lorsque le produit de programme d'ordinateur est réalisé sur un dispositif.

10. Dispositif (332) pour faire fonctionner un système de frein d'un véhicule (300), le système de frein ayant un dispositif (102) électronique de réglage pour commander une pression (330) de frein pour un frein (106) du véhicule (300) dans un mode de fonctionnement normal et un dispositif (104) pneumatique de réglage pour commander la pression (330) de frein dans un mode de fonctionnement de sécurité et dans lequel le dispositif est constitué pour effectuer les stades du procédé suivant l'une des revendications 1 à 8.

11. Système de frein d'un véhicule (300), le système de frein ayant les caractéristiques suivantes :
un dispositif (102) électronique de réglage pour commander une pression (330) de frein pour un frein (106) du véhicule (300) dans un mode de fonctionnement normal ;
un dispositif pneumatique de réglage pour commander la pression (330) de frein dans un mode de sécurité ; et
un dispositif (332) suivant la revendication 10 pour faire fonctionner le système de frein.
